# EUROPEAN PATENT APPLICATION

(11) **EP 3 503 638 A1**
(43) Date of publication of application: **26.06.2019**
(21) Application number: 17210314.5
(22) Date of filing: 22.12.2017
(51) Int. Cl.: H04W 68/02

(54) **BASE STATION SYSTEM FOR HANDLING A PAGING REQUEST TOWARDS A USER ENTITY**

(71) Applicant: Deutsche Telekom AG, 53113 Bonn (DE)
(72) Inventor: Klatt, Axel, 50999 Köln (DE)
(74) Representative: Patentship Patentanwaltsgesellschaft mbH

(57) **Abstract**

The disclosure relates to a base station system for handling a paging request towards a user entity (105) in a communication cell, wherein the base station system comprises: a broadcast transmitter (103a-c) being configured to broadcast the paging request in the communication cell, the paging request indicating the user entity (105); and a multiple-in-multiple-out (MIMO) base station (101) that is configured to handle communications of the user entity (105) in the communication cell using beamforming after broadcasting the paging request by the broadcast transmitter (103a-c); and wherein the MIMO base station (101) and the broadcast transmitter (103a-c) are arranged spaced apart from each other in the communication cell.

## Description

### TECHNICAL FIELD

In general, the present invention relates to the field of wireless communications. More specifically, the present invention relates to a base station system, a user entity and a corresponding method for handling a paging request towards a user entity.

### BACKGROUND

To make use of available communication resources more efficiently, space diversity (also known as antenna diversity) can be used and being enhanced to the use of directional beams. For this purpose, a base station can use differently-oriented beams for communication with different user entities in the space dimension. Multiple Input Multiple Output Systems (MIMO) combine the transmission via multiple antenna elements and can create the above mentioned beams in a more selective manner. Such systems having a higher number of transmitting and receiving antenna elements are also referred to as Massive Multiple Input Multiple Output Systems (mMIMO).

In order for a call to reach a user entity, the following paging procedure is performed in LTE systems by a mobility management entity (MME): firstly, the MME initiates a call (e.g., a S1AP paging message) to a number of eNBs, which are assigned to a so-called tracking area (TA). The tracking area (TA) can comprise a plurality of neighboring eNBs, and the user entity (UE) can move around inside the tracking area without updating the underlying core network (here the MME) about its change of the geographical location.

In the normal state (e.g. IDLE mode), the user entity is registered in the mobile core network, but the location is known only at the TA level, i.e. on a TA granularity. When the tracking area (TA) is changed, the user entity informs the core network (i.e. MME) about the change to another tracking area. In this regard, the MME can transmit a call for paging only to all eNBs assigned to a tracking area because of the limited location knowledge from the user entity. The eNBs inside the same tracking area, in turn, initiate a paging procedure by sending out a paging message in each individual cell.

A problem with the MIMO-directed-beamforming communication is transmission of the paging message over a large space segment, especially to the user entity which is not yet connected to the mobile radio system. In order to transmit the paging message using beamforming, several beams or beam movement can be deployed. Thereby, available space-diversity resources must be deployed for transmitting the paging message in different directions, which contradicts the space-diversity notion per se.

Another problem is the shading in the urban environment, which can be caused for example by buildings, trees or other obstacles between the user entity and the base station therein. This problem can only be partially compensated by electromagnetic diffraction effects, in particular by increasing beam separation or resolution.

In light of the above, there is a need for an improved base station system, allowing handling a paging request towards a user entity.

### SUMMARY OF THE INVENTION

It is an object of the disclosure to provide an improved base station system, allowing handling a paging request towards a user entity.

The foregoing and other objects are achieved by the subject matter of the independent claims. Further implementation forms are apparent from the dependent claims, the description and the figures.

Generally, the invention relates to a multiple-in-multiple-out (MIMO) base station, a broadcast transmitter, a user entity as well as a corresponding method for handling a paging request towards a user entity in a communication network and providing the user entity with reliable and efficient radio access to a communication network.

More specifically, embodiments of the present disclosure can utilize urban-distributed transmitters, which are arranged spaced apart from and assigned to an actual base station of a cell. These urban-distributed transmitters can be used to transmit the paging information by broadcast in a decentralized manner to the user entities, such as user equipments or mobile phones or vehicle communication systems. Thereby, the embodiments of the present disclosure offer the following advantage: a user entity whose exact position within the cell is unknown can be still reached.

Thus, according to a first aspect the disclosure relates to a base station system for handling a paging request towards a user entity in a communication cell, wherein the base station system comprises: a broadcast transmitter being configured to broadcast the paging request in the communication cell, the paging request indicating the user entity; and a multiple-in-multiple-out (MIMO) base station that is configured to handle communications of the user entity in the communication cell using beamforming after broadcasting the paging request by the broadcast transmitter; and wherein the MIMO base station and the broadcast transmitter are arranged spaced apart from each other in the communication cell.

An improved base station system is hence provided, allowing handling a paging request towards a user entity.

In a further possible implementation form of the first aspect, the base station system comprises a plurality of broadcast transmitters which are arranged spaced apart from the MIMO base station and from each other in the communication cell, wherein each broadcast transmitter is further configured to broadcast the paging request indicating the user entity.

Thereby, the paging request can efficiently be communicated across the entire communication cell with reduced transmission power per beamforming transmitter, as compared to the transmission power which would be required by the MIMO base station to transmit the paging request.

In a further possible implementation form of the first aspect, the respective transmitter is arranged in an area of the communication cell which is shaded with respect for receiving transmission beams originating from the MIMO base station.

Thereby, the paging request can efficiently be communicated across the area of the communication cell, in particular in shaded urban regions which are difficult to reach using beamforming.

In a further possible implementation form of the first aspect, the respective broadcast transmitter comprises at least a broadcasting antenna for broadcasting the paging request simultaneously in a multiplicity of directions.

In a further possible implementation form of the first aspect, the respective broadcast transmitter is configured to broadcast the paging request synchronously and/or continuously and/or independently from the MIMO base station.

Thereby, the paging request can be broadcasted even in case of a failure of the MIMO base station. The broadcast transmitters can transmit the paging request also independently from each other.

In a further possible implementation form of the first aspect, the MIMO base station is configured to handle communications in the communication cell using beamforming according the fifth generation (5G) communication technology or higher, and/or wherein the respective broadcast transmitter is configured to broadcast the paging request according to one of the following communication technologies: GSM, LTE, LTE-A, UMTS, HSPA, 3GPP, in particular 3GPP NR, New Radio, 5G or IEEE radio systems such as Wireless LAN, WiGig, or any of the evolutions and successors of these technologies.

In a further possible implementation form of the first aspect, the MIMO base station comprises a MIMO antenna, in particular a massive MIMO antenna according to the 5G technology, being configured to receive a communication beam from the user entity and to transmit the communication beam towards the user entity.

In a further possible implementation form of the first aspect, the MIMO antenna comprises an array of antenna elements, in particular at least 16 antenna elements, for generating a code beam, and the MIMO base station is configured to generate a feed signal to the MIMO antenna for generating a communication beam upon the basis of a predetermined MIMO codebook, in particular a MIMO codebook according to the 5G technology.

In a further possible implementation form of the first aspect, the MIMO base station is configured to receive a paging message, in particular a S1AP message or a paging message corresponding to the S1AP message, from a mobility management entity (MME) that manages mobility information of the user entity, in particular MME or AMF (Access and Mobility Management Function), the paging message signal indicating the user entity, and the base station is configured to transmit the paging request towards the broadcast transmitter using a communication beam upon reception of the paging message.

In a further possible implementation form of the first aspect, the MIMO base station is configured to transmit a dedicated communication beam directed towards the respective transmitter for directly communicating with the respective broadcast transmitter, in particular for transmitting the paging request towards the respective transmitter, for activating or deactivating the respective broadcast transmitter, for controlling operation of the respective transmitter, for adjusting a broadcast transmission power of the respective broadcast transmitter or for updating functions or operation system of the respective transmitter.

The dedicated communication beam forms a spatially aligned communication channel towards the respective broadcasting transmitter.

In a further possible implementation form of the first aspect, each broadcast transmitter comprises a beam reception antenna for receiving the communication beam from the base station, and a broadcasting antenna for broadcasting the paging request.

Each transmitter can comprise circuitry which detects data carried by the received beam, and modulates the received data according to a modulation scheme such as OFDM, SC-FDM or QAM, used for broadcasting in one of the aforementioned technologies.

In a further possible implementation form of the first aspect, the MIMO base station is configured to transmit the paging request to the broadcast transmitter which is located closer to the user entity than another broadcast transmitter in the communication cell.

In a further possible implementation form of the first aspect, the respective broadcast transmitter is configured to receive a paging message, in particular a S1AP message or a paging message corresponding to the S1AP message, from a mobility management entity that manages mobility information of the user entity, in particular MME or AMF (Access and Mobility Management Function), the message signal indicating the user entity, and the respective broadcast transmitter is configured to broadcast the paging request upon reception of the paging message.

In a further possible implementation form of the first aspect, the respective broadcast transmitter comprises a transmitter identification that identifies the respective broadcast transmitter in the communication cell.

In a further possible implementation form of the first aspect, the respective broadcast transmitter is configured to determine its location in the communication cell, in particular upon reception of a GPS signal, and each transmitter is configured to transmit, in particular broadcast, its transmitter identification towards the MIMO base station.

According to a second aspect, the disclosure relates to a user entity, in particular a smartphone, capable of communicating with the base station system according to the first aspect, the user entity being configured to receive a paging request from the broadcast transmitter, the paging request indicating the user entity, and establish a communication channel, for example a random access control channel, towards the MIMO base station using beamforming after broadcasting the paging request by the broadcast transmitter.

The user entity can comprise a beamforming antenna, in particular a MIMO antenna arrangement, for transmitting or receiving a communication beam towards the MIMO base station. The beamforming antenna can additionally be configured to receive a broadcast signal. Optionally, the user entity can comprise a broadcast antenna capable of receiving the broadcast signal.

In a further possible implementation form of the second aspect, the user entity is configured to identify at least one broadcast transmitter being associated with the MIMO base station. The broadcast transmitter can broadcast a transmitter identification which, upon reception, allows the user entity to identify the MIMO base station.

According to a third aspect, the disclosure relates to a paging method for handling a paging request towards a user entity in a communication cell by a base station system, wherein the base station system comprises a broadcast transmitter being configured to broadcast the paging request in the communication cell, the paging request indicating the user entity, and a multiple-in-multiple-out (MIMO) base station that is configured to handle communications of the user entity in the communication cell using beamforming after broadcasting the paging request by the broadcast transmitter, wherein the MIMO base station and the broadcast transmitter are arranged spaced apart from each other in the communication cell.

The paging method comprises the following steps: broadcasting the paging request by the transmitter in the communication cell; upon receiving the broadcasted paging request by the user entity, establishing a beamforming communication link between the user entity and the MIMO base station by the user entity; and handling communications of the user entity by the MIMO base station in the communication cell using beamforming.

The paging method can be implemented using the system according to the first aspect.

Furthermore, the user entity of the second aspect can be configured to communicate with the base station system using the communication method of the third aspect.

Thus, an improved paging method is provided, allowing handling a paging request towards a user entity.

According to a fourth aspect, the invention relates to a computer program comprising a computer readable program code which, when executed on theMIMO base station and/or the broadcast transmitter of the base station system according to the first aspect, and/or on the user entity according to the second aspect, performs the method according to the third aspect.

According to a fifth aspect, the invention relates to a computer program product comprising the computer program according to the fourth aspect.

### BRIEF DESCRIPTION OF THE DRAWINGS

Further embodiments of the invention will be described with respect to the following figures, wherein:
Figure 1 shows a schematic diagram of a communication network comprising a base station, a plurality of transmitters and a user entity according to an embodiment;
Figure 2 shows a schematic diagram illustrating an exemplary paging procedure according to an embodiment;
Figure 3 shows a schematic diagram of a communication network comprising a base station, a plurality of transmitters and a user entity according to an embodiment;
Figure 4 shows a schematic diagram illustrating an exemplary paging procedure according to an embodiment; and
Figure 5 shows a schematic diagram illustrating a paging method according to an embodiment.

In the various figures, identical reference signs will be used for identical or at least functionally equivalent features.

### DETAILED DESCRIPTION OF EMBODIMENTS

In the following description, reference is made to the accompanying drawings, which form part of the disclosure, and in which are shown, by way of illustration, specific aspects in which the present invention may be placed. It will be appreciated that other aspects may be utilized and structural or logical changes may be made without departing from the scope of the present invention. The following detailed description, therefore, is not to be taken in a limiting sense, as the scope of the present invention is defined by the appended claims.

For instance, it will be appreciated that a disclosure in connection with a described method may also hold true for a corresponding device or system configured to perform the method and vice versa. For example, if a specific method step is described, a corresponding device may include a unit to perform the described method step, even if such unit is not explicitly described or illustrated in the figures.

Moreover, in the following detailed description as well as in the claims, embodiments with different functional blocks or processing units are described, which are connected with each other or exchange signals. It will be appreciated that the present invention covers embodiments as well, which include additional functional blocks or processing units that are arranged between the functional blocks or processing units of the embodiments described below.

Finally, it is understood that the features of the various exemplary aspects described herein may be combined with each other, unless specifically noted otherwise.

The present disclosure is based on the recognition that the problems in the state-of-the-art communication systems can be solved by urban-distributed transmitters, which are arranged spaced apart from and assigned to an actual base station of a cell. According to embodiments of the disclosure, these urban-distributed transmitters can transmit the paging information by broadcast in a decentralized manner to the user entities, such as the user equipments or mobile phones or car communication systems. This offers the advantage that a user entity whose exact position within the cell is unknown can be still reached.

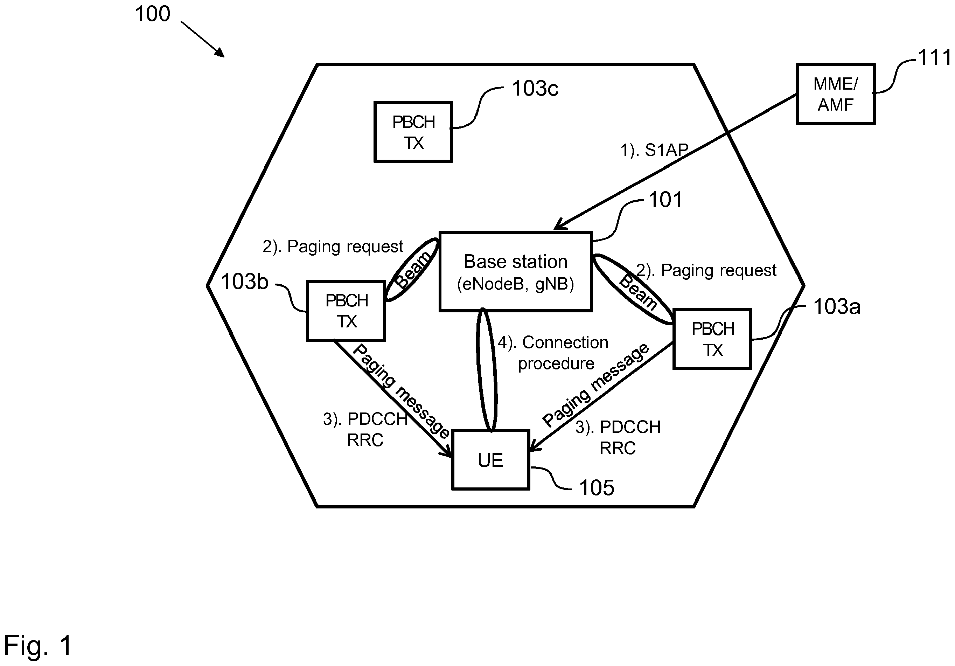

In this regard, embodiments of the disclosure can be implemented in a communication network 100 as shown in figure 1, wherein the communication network 100 comprises a base station system for handling a paging request towards a user entity 105 and wherein the base station system comprises a multiple-in-multiple-out (MIMO) base station 101 according to an embodiment and a plurality of broadcast transmitters 103a-c according to an embodiment in a communication cell. In particular, the plurality of broadcast transmitters 103a-c are arranged spaced apart from the MIMO-base station 101 and also apart from each other in the communication cell and the broadcast transmitters 103a-c are controlled by the base station 101 by means of the control beams.

In an embodiment, the MIMO base station 101 is configured to handle communications in the communication cell using beamforming according to the fifth generation (5G) or even more advanced communication technology; the respective broadcast transmitter 103a-c is configured to broadcast the paging request according to one of the following communication technologies: GSM, LTE, LTE-A, UMTS, HSPA, 3GPP, in particular 3GPP NR, New Radio, 5G or IEEE radio systems such as Wireless LAN, WiGig, or any of the evolutions and successors of these technologies.

As can be taken from figure 1, the MIMO base station 101 is configured to receive a paging message, in particular a S1AP message or a paging message corresponding to the S1AP message, from a mobility management entity (MME) 111 that manages mobility information of the user entity 105, for example the MME in LTE networks or the Access and Mobility Management Function (AMF) in 5G networks, wherein the paging message signal indicates the user entity 105. The MIMO base station 101 is configured to transmit the paging request towards the broadcast transmitters 103a-c using a communication beam upon reception of the paging message from the mobility management entity (MME) 111.

Furthermore, each broadcast transmitter 103a-c comprises a transmitter identification that identifies the respective broadcast transmitter 103a-c in the communication cell and each broadcast transmitter 103a-c is configured to determine its location in the communication cell, in particular upon reception of a GPS signal. Each transmitter 103a-c is then configured to transmit, in particular broadcast, its transmitter identification towards the MIMO base station 101.

According to the information of the transmitter identification from the plurality of transmitters 103a-c, the MIMO base station 101 can thus transmit the paging request to the broadcast transmitter 103a-c which is located closer to the user entity 105 than another broadcast transmitter 103a-c in the communication cell.

After receiving the paging request from the base station 101, the plurality of broadcast transmitters 103a-c are configured to broadcast the paging request in the communication cell, wherein the paging request indicates the user entity 105. Each of the plurality of broadcast transmitters 103a-c comprises a beam reception antenna for receiving the communication beam from the base station 101 as well as a broadcasting antenna for broadcasting the paging request simultaneously in a multiplicity of directions and continuously and/or independently from the MIMO base station 101.

For communicating with a user entity 105 such as a user equipment (UE) or a mobile phone or a car communication system, the MIMO base station 101 comprises a MIMO antenna, in particular a massive MIMO antenna according to the 5G technology, which is configured to either receive a communication beam from the user entity 105 or to transmit the communication beam towards the user entity 105, wherein the MIMO antenna can comprise an array of antenna elements, in particular at least 16 antenna elements, for generating a code beam. The base station 101 is configured to generate a feed signal to the MIMO antenna for generating a communication beam upon the basis of a predetermined MIMO codebook, in particular a MIMO codebook according to the 5G technology.

The user entity 105, upon receipt of the paging request from the transmitters 103a-c associated with the base station 101, can establish a connection link with the MIMO base station 101, which can handle communications of the user entity 105 in the communication cell using beamforming. Therefore, the connection link can be established via beamforming, since the geographic location of the accessing user entity 105 is now known in the base station 101 and an UE-specific beam can be formed for targeted communication with the user entity 105.

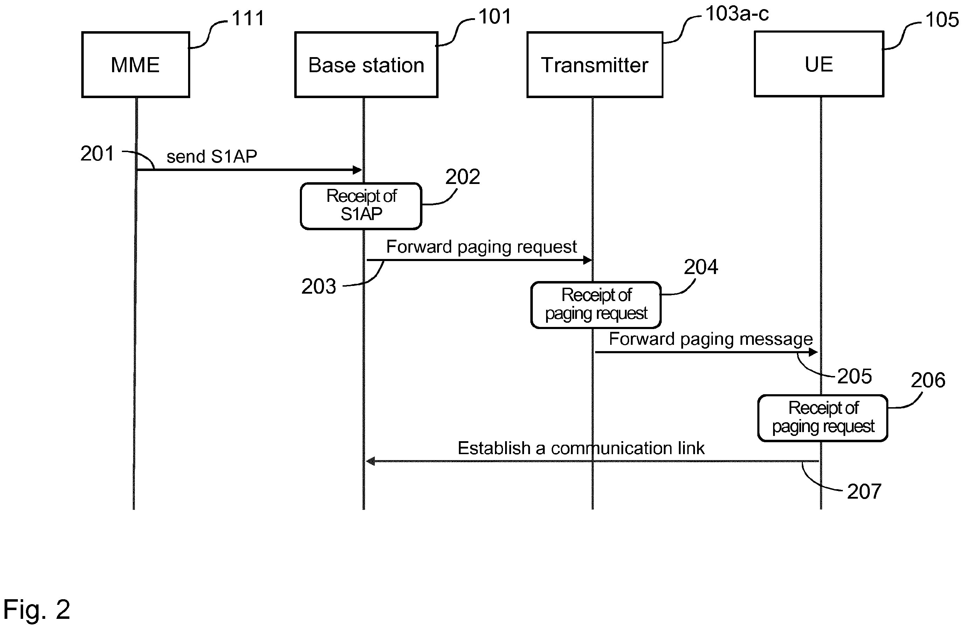

In a first communication scenario for paging, exemplarily LTE, which can be implemented in the communication network 100 as shown above in figure 1, the MME 111 first sends a S1AP message to the base station 101 and the base station 101 can further transmit the paging request to the distributed broadcast transmitters 103a-c. More details about the first paging scenario are further described in the figure 2 as follows.

Figure 2 shows a schematic diagram illustrating an exemplary procedure of paging towards a user entity 105 in a first communication scenario corresponding to LTE according to an embodiment, wherein the base station 101 is configured to receive a paging message from a mobility management entity (MME) 111 and transmit the paging request to the plurality of broadcast transmitters 103a-c. The procedure shown in figure 2 comprises the following steps:
The MME 111 forwards a signal of S1 Application Protocol (S1AP), forming an example of a paging message, to the base station 101 (step 201).

The base station 101 receives the S1AP signal for paging, wherein the S1AP message provides the control plane signaling between E-UTRAN and evolved packet core and has functions such as mobility functions, UE capability info indication function, location reporting and etc. (step 202).

The base station 101 forwards one or more paging requests to the broadcast transmitters 103a-c, wherein a copy of the S1AP message can be transmitted (step 203).
The base station 101 can communicate with the transmitters 103a-c using beams oriented towards transmitters 103a-c. However, a separate broadcasting channel between the base station 101 and the transmitters 103a-c is possible.

The distributed transmitters 103a-b receive the paging requests (step 204) and send the paging requests with RRC (radio resource control) information to initiate the paging procedure via broadcast (step 205).

The user entity 105, upon receipt of the paging request from the transmitters 103a-c associated with the base station 101 (step 206), initiates the connection procedure with the base station 101, for example using beamforming (step 207).

The advantage of the above embodiment is that the mobility management entity (MME) 111 or the Access and Mobility Management Function (AMF) in 5G systems or the network outside the cell does not need knowledge about the broadcast transmitters 103a-c as the paging message is forwarded by the base station 101. A variant embodiment consists in that the MIMO base station 101 forwards the paging request only to those transmitters 103a-c which are arranged locally in the vicinity of the user entity 105.

Furthermore, the MIMO base station 101 can be configured to transmit a dedicated communication beam directed towards the respective transmitter for directly communicating with the respective broadcast transmitter 103a-c, in particular for transmitting the paging request towards the respective transmitter 103a-c, for activating or deactivating the respective broadcast transmitter 103a-c, for controlling operation of the respective transmitter 103a-c, for adjusting a broadcast transmission power of the respective broadcast transmitter 103a-c or for updating functions or operation system of the respective transmitter 103a-c.

According to the embodiments, it is essential that the transmitters 103a-c are distributed and spaced apart from the base station 101. To avoid the shadowing effects caused by buildings or other obstacles, each respective transmitter 103a-c can be further arranged to locate in an area of the communication cell that is shaded with respect for receiving transmission beams originating from the MIMO base station 101.

According to an embodiment, the transmitters 103a-c can be controlled by the base station 101 by means of a wired connection using copper, coax or fiber.

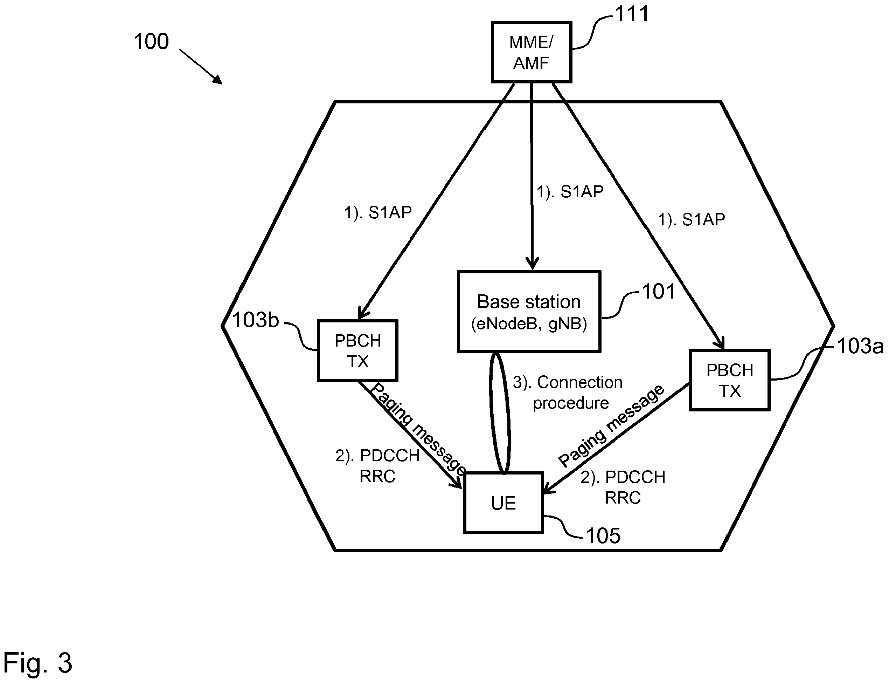

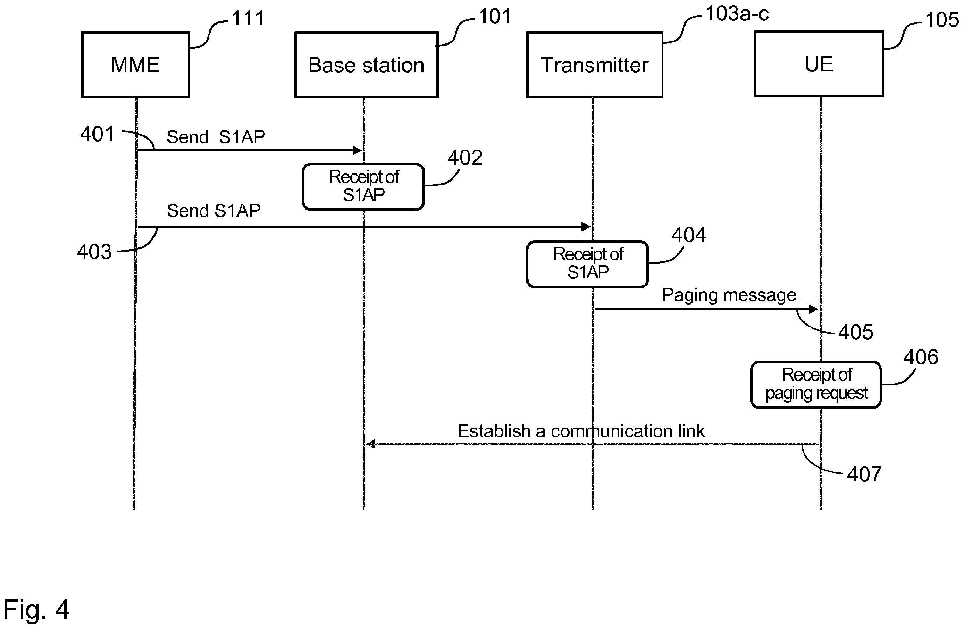

In a further communication scenario for paging, the MME 111 can send a paging request both to the base station 101 and to the broadcast transmitters 103a-c. The further communication scenario will be further explained under reference to figures 3 and 4 in the following embodiment.

Similar to figure 1, the communication network 100 shown in figure 3 comprises a multiple-in-multiple-out (MIMO) base station 101 and a plurality of broadcast transmitters 103a-b in a communication cell according to an embodiment, as well as a user communication device 105 according to an embodiment, wherein the plurality of broadcast transmitters 103a-b are arranged spaced apart from the MIMO-base station 101 and also apart from each other in the communication cell.

In the further communication scenario for paging, the MME 111 can forward a signal of S1 Application Protocol (S1AP) to the base station 101 as well as to the plurality of broadcast transmitters 103a-b, wherein the S1AP message provides the control plane signaling between E-UTRAN and evolved packet core and has functions such as mobility functions, UE capability info indication function, location reporting and etc.

This offers the following advantage: the base station 101 is informed about the upcoming connection but does not need to perform anything further. The broadcast transmitters 103a-b can either receive the paging request directly from the MME 111 or are set up network-technically as additional recipients of the paging request. The paging procedure according to the further communication scenario is described in figure 4.

Figure 4 shows a schematic diagram illustrating an exemplary procedure of paging towards a user entity 105 in a further communication scenario, exemplarily LTE, according to an embodiment, wherein the procedure comprises the following steps:
The MME 111 sends a signal of S1 Application Protocol (S1AP), forming an example of the paging message, for paging to both the MIMO base station 101 (step 401) and to the plurality of broadcast transmitters 103a-c (step 403).

The paging request is received by both the MIMO base station 101 (step 402) and the plurality of broadcast transmitters 103a-c (step 404).

The broadcast transmitters 103a-c forward the paging request with PDCCH/RRC via broadcast to the user entity 105 (step 405).

The user entity 105 sends the connection procedure upon receipt of the paging request (step 406) possibly by using beamforming and can establish a communication link with the MIMO base station 101 (step 407).

The examples described with respect to LTE can correspondingly be applied in the other communication systems such as those mentioned herein, including 5G communications.

The advantages of this procedure include: simplification of the signal exchange and release of the beamforming resources at the MIMO base station 101.

According to an example, the paging procedure in 5G systems can be similar to that in LTE systems: the Core Access and Mobility Management Function (AMF) in 5G systems can at least partially take over the mobility functions of the MME, e.g. in a virtualized embodiment. The communication from the 5G New Radio base station, e.g. next-generation-node base station (gNB), can therefore be analogous to that from the eNB in LTE systems.

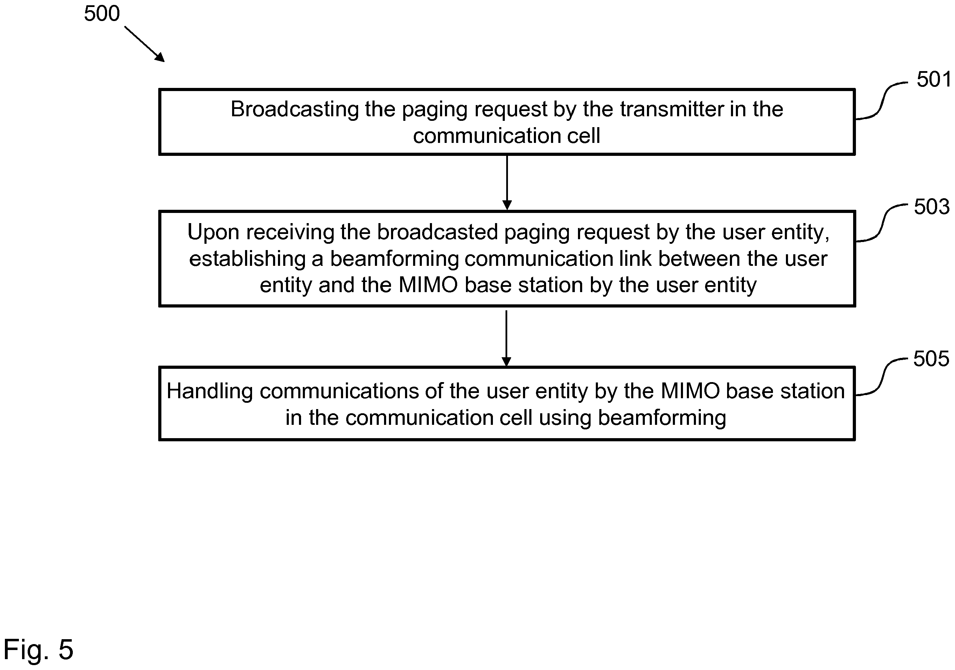

Figure 5 shows a diagram illustrating a corresponding paging method 500 for handling a paging request towards a user entity 105 in a communication cell by a base station system, wherein the base station system comprises a broadcast transmitter 103a-c being configured to broadcast the paging request in the communication cell, the paging request indicating the user entity 105, and a multiple-in-multiple-out (MIMO) base station 101 that is configured to handle communications of the user entity 105 in the communication cell using beamforming after broadcasting the paging request by the broadcast transmitter 103a-c, wherein the MIMO base station 101 and the broadcast transmitter 103a-c are arranged spaced apart from each other in the communication cell.

The paging method 500 comprises the following steps: broadcasting 501 the paging request by the transmitter 103a-c in the communication cell; upon receiving the broadcasted paging request by the user entity 105, establishing 503 a beamforming communication link between the user entity 105 and the MIMO base station 101 by the user entity 105; and handling 505 communications of the user entity 105 by the MIMO base station 101 in the communication cell using beamforming.

While a particular feature or aspect of the disclosure may have been disclosed with respect to only one of several implementations or embodiments, such feature or aspect may be combined with one or more other features or aspects of the other implementations or embodiments as may be desired and advantageous for any given or particular application. Furthermore, to the extent that the terms "include", "have", "with", or other variants thereof are used in either the detailed description or the claims, such terms are intended to be inclusive in a manner similar to the term "comprise". Also, the terms "exemplary", "for example" and "e.g." are merely meant as an example, rather than the best or optimal. The terms "coupled" and "connected", along with derivatives may have been used. It should be understood that these terms may have been used to indicate that two elements cooperate or interact with each other regardless of whether they are in direct physical or electrical contact, or they are not in direct contact with each other.

Although specific aspects have been illustrated and described herein, it will be appreciated by those of ordinary skill in the art that a variety of alternate and/or equivalent implementations may be substituted for the specific aspects shown and described without departing from the scope of the present disclosure. This application is intended to cover any adaptations or variations of the specific aspects discussed herein.

Although the elements in the following claims are recited in a particular sequence with corresponding labeling, unless the claim recitations otherwise imply a particular sequence for implementing some or all of those elements, those elements are not necessarily intended to be limited to being implemented in that particular sequence.

Many alternatives, modifications, and variations will be apparent to those skilled in the art in light of the above teachings. Of course, those skilled in the art readily recognize that there are numerous applications of the invention beyond those described herein. While the present invention has been described with reference to one or more particular embodiments, those skilled in the art recognize that many changes may be made thereto without departing from the scope of the present invention. It is therefore to be understood that within the scope of the appended claims and their equivalents, the invention may be practiced otherwise than as specifically described herein.

## Claims

1. A base station system for handling a paging request towards a user entity (105) in a communication cell, the base station system comprising:
a broadcast transmitter (103a-c) being configured to broadcast the paging request in the communication cell, the paging request indicating the user entity (105); and
a multiple-in-multiple-out (MIMO) base station (101) that is configured to handle communications of the user entity (105) in the communication cell using beamforming after broadcasting the paging request by the broadcast transmitter (103a-c); and wherein
the MIMO base station (101) and the broadcast transmitter (103a-c) are arranged spaced apart from each other in the communication cell.

2. The base station system according to claim 1, comprising a plurality of broadcast transmitters (103a-c) which are arranged spaced apart from the MIMO base station (101) and from each other in the communication cell, each broadcast transmitter (103a-c) being further configured to broadcast the paging request indicating the user entity (105).

3. The base station system according to anyone of the preceding claims, wherein the respective broadcast transmitter (103a-c) is configured to broadcast the paging request continuously and/or independently from the MIMO base station (101).

4. The base station system according to anyone of the preceding claims, wherein the MIMO base station (101) is configured to handle communications in the communication cell using beamforming according the fifth generation (5G) communication technology or higher, and/or wherein the respective broadcast transmitter (103a-c) is configured to broadcast the paging request according to one of the following communication technologies: GSM, LTE, LTE-A, UMTS, HSPA, 3GPP, in particular 3GPP NR, New Radio, 5G or IEEE radio systems such as Wireless LAN, WiGig, or any of the evolutions and successors of these technologies.

5. The base station system according to anyone of the preceding claims, wherein the MIMO base station (101) is configured to receive a paging message, in particular a S1AP message or a paging message corresponding to the S1AP message, from a mobility management entity (111) that manages mobility information of the user entity (105), in particular MME or AMF, the paging message signal indicating the user entity (105), and wherein the base station (101) is configured to transmit the paging request towards the broadcast transmitter (103a-c) using a communication beam upon reception of the paging message.

6. The base station system according to anyone of the preceding claims, wherein the MIMO base station (101) is configured to transmit a dedicated communication beam directed towards the respective transmitter (103a-c) for directly communicating with the respective broadcast transmitter (103a-c), in particular for transmitting the paging request towards the respective transmitter (103a-c), for activating or deactivating the respective broadcast transmitter (103a-c), for controlling operation of the respective transmitter (103a-c), for adjusting a broadcast transmission power of the respective broadcast transmitter (103a-c) or for updating functions or operation system of the respective transmitter (103a-c).

7. The base station system according to anyone of the preceding claims, wherein the MIMO base station (101) is configured to transmit the paging request to the broadcast transmitter (103a-c) which is located closer to the user entity (105) than another broadcast transmitter (103a-c) in the communication cell.

8. The base station system according to anyone of the preceding claims, wherein the respective broadcast transmitter (103a-c) is configured to receive a paging message, in particular a S1AP message or a paging message corresponding to the S1AP message, from a mobility management entity (111) that manages mobility information of the user entity (105), in particular MME or AMF, the message signal indicating the user entity (105), and wherein the respective broadcast transmitter (103a-c) is configured to broadcast the paging request upon reception of the paging message.

9. The base station system according to anyone of the preceding claims, wherein the respective broadcast transmitter (103a-c) comprises a transmitter identification that identifies the respective broadcast transmitter (103a-c) in the communication cell.

10. The base station system according to anyone of the preceding claims, wherein the respective broadcast transmitter (103a-c) is configured to determine its location in the communication cell, in particular upon reception of a GPS signal, and wherein each transmitter (103a-c) is configured to transmit, in particular broadcast, its transmitter identification towards the MIMO base station (101).

11. A user entity (105) that is configured to communicate with the base station system according to anyone of the preceding claims 1 to 10, the user entity (105) being configured to:
receive a broadcast signal from the broadcast transmitter (103a-c), the broadcast signal comprising a paging request indicating the user entity (105) in the communication cell; and
establish a communication channel towards the MIMO base station (101) using beamforming after broadcasting the paging request by the broadcast transmitter (103a-c).

12. The user entity (105) of claim 11, that is configured to identify at least one broadcast transmitter (103a) being associated with the MIMO base station (101).

13. A paging method (500) for handling a paging request towards a user entity (105) in a communication cell by a base station system, the base station system comprising a broadcast transmitter (103a-c) being configured to broadcast the paging request in the communication cell, the paging request indicating the user entity (105), and a multiple-in-multiple-out (MIMO) base station (101) that is configured to handle communications of the user entity (105) in the communication cell using beamforming after broadcasting the paging request by the broadcast transmitter (103a-c), wherein the MIMO base station (101) and the broadcast transmitter (103a-c) are arranged spaced apart from each other in the communication cell, wherein the method (500) comprises:
broadcasting (501) the paging request by the transmitter (103a-c) in the communication cell;
upon receiving the broadcasted paging request by the user entity (105), establishing (503) a beamforming communication link between the user entity (105) and the MIMO base station (101) by the user entity (105); and
handling (505) communications of the user entity (105) by the MIMO base station (101) in the communication cell using beamforming.

14. A computer program comprising a computer readable program code which, when executed on the MIMO base station (101) and/or the broadcast transmitter (103a-c) of the base station system according to anyone of the preceding claims 1 to 10, and/or on the user entity (105) according to anyone of the preceding claim 11 to 12, performs the method (500) according to claim 13.

15. A computer program product comprising the computer program according to claim 14.
